# EUROPEAN PATENT APPLICATION

(11) **EP 1 357 500 A2**
(43) Date of publication of application: **29.10.2003**
(21) Application number: 03076185.2
(22) Date of filing: 22.04.2003
(51) Int. Cl.: G06F 17/60

(54) **A communication device**

(30) Priority: 22.04.2002 EP 02076608
(71) Applicant: CP3Group, Walkinstown Dublin 12 (IE)
(72) Inventor: Colton, Mervyn c/o CP3Group, Walkinstown, Dublin 12 (IE)
(74) Representative: Quintelier, Claude

(57) **Abstract**

A communication device comprising at least a first station to which a selling entity memory for storing promotion items is assigned and at least a second station to which a retailer entity memory is assigned, said first and second station being connected to a communication network in order to enable a two-way communication between them, whereby said communication network comprises an interface station, provided for communicating with said first and second station, said interface station comprising a database, provided for storing a predetermined set of input and request frames as well as promotion item blocks built up according to at least one of said input frames, and wherein to each first and second station there is assigned a selling entity identifier, respectively a retailer entity identifier, identifying the respective stations, said first station comprising a block generator provided for retrieving from said database one of said input frames and for retrieving promotion items from said selling entity memory, said block generator being further provided for integrating said retrieved promotion items and said selling entity identifier into said retrieved input frame in order to form said promotion item block, said first station being provided for transmitting said generated promotion item block to said interface station, said second station being provided for retrieving a request frame from said database, said second station comprising a request message generator, provided for generating request messages by inputting into said request frame said retailer entity identifier, said second station being also provided for transmitting said request message to said interface station, said interface station being provided for selecting, based on said request message and among said stored promotion item blocks, those compatible with said request message.

## Description

The present invention relates to a communication device comprising at least a first station to which a selling entity memory for storing promotion items is assigned and at least a second station to which a retailer entity memory is assigned, said first and second station being connected to a communication network in order to enable a two-way communication between them.

Such a communication device is well known and for example formed by the telephone network. When a selling entity, which is for example formed by a manufacturer owning one or more brands or an importer, wants to propose a promotion on one or more brands to a retailer entity, which is for example formed by a distribution network owning a plurality of stores in one or more countries, the selling entity generally uses the telephone network to send a facsimile or an e-mail message to the retailer entity. The latter message comprises the details of the promotion such as the concerned brands, the proposed price, the time period etc.. The retailer entity receiving the facsimile or e-mail message will then respond using the same communication means or even the telephone. Messages are so exchanged between the first station of the selling entity and the second station of the retailer entity using the telephone network as communication network.

Although the telephone network nowadays provides a reliable and fast communication network, telephone communication still requires the availability of at least two parties at a same time. Moreover, when a selling entity wants to make a promotional offer to more than one retailer entity, several faxes or e-mails have to be sent. The probability that such a promotional offer is positively considered by a retailer entity is however not high, because the selling entity is not always correctly aware of the needs of the retailer entity. Therefor a lot of efforts have to be made for a generally low yield result.

It is an object of the present invention to provide a communication device enabling a higher yield.

For this purpose a communication device according to the present invention is characterised in that said communication network comprises an interface station, provided for communicating with said first and second station, said interface station comprising a database, provided for storing a predetermined set of input and request frames as well as promotion item blocks built up according to at least one of said input frames, and wherein to each first and second station there is assigned a selling entity identifier respectively a retailer entity identifier identifying the respective station, said first station comprising a block generator, provided for retrieving from said database one of said input frames and for retrieving promotion items from said selling entity memory, said block generator being further provided for integrating said retrieved promotion items and said selling entity identifier into said retrieved input frame, in order to form said promotion item block, said first station being provided for transmitting said generated promotion item block to said interface station, said second station being provided for retrieving a request frame from said database, said second station comprising a request message generator provided for generating request messages by inputting into said request frame said retailer entity identifier, said second station being also provided for transmitting said request message to said interface station, said interface station being provided for selecting, based on said request message and among said stored promotion item blocks, those compatible with said request message. The interface station enables to establish a link between the selling entity and the retailer entity. Each entity can access the database of the interface station independently from each other, so that there is no longer a need for the selling entity to contact several retailer entities individually thereby saving a lot of time. Moreover, by using a selling and a retailer entity identifier and integrating them in the promotion item block, respectively the request message, the interface station is able to select among the promotion item blocks stored in the database those fulfilling the requests such as given in the request message. A more efficient communication is thus established between the selling and retailer entity.

A first preferred embodiment of a communication device according to the present invention is characterised in that said device comprises a further database provided for storing product item identifiers, said further database being connected to said communication network. The product item identifiers, for example formed by a barcode enable an easy and universal recognition of the product subject of the promotion.

A second preferred embodiment of a communication device according to the present invention is characterised in that said set of request frames comprises a subset of rejection message frames, said request message generator being provided for enabling an insertion of a rejection message into a rejection message frame. The rejection message frames enable the selling entity to become aware of the reason of the rejection of the promotion item.

A third preferred embodiment of a communication device according to the present invention is characterised in that said set of request messages comprises a further subset of evaluation message frames, said first station being provided for retrieving said further subset of evaluation message frame and said request message generator and said block generator being provided for generating an evaluation request message based on said evaluation message frame. In such a manner the selling entity can evaluate the running promotion.

The invention will now be described in more detail by means of an example illustrated in the drawings. In the drawings :
figure 1 shows a schematic set-up of a communication device according to the present invention;
figure 2 illustrates schematically a decision tree for establishing a link between the selling and retailer entity;
figure 3 shows a screen used by the selling entity for preparing a promotion item block;
figure 4 shows a screen used by the selling entity for assigning different retailer entities;
figure 5 shows a screen used by the selling entity for receiving rejection messages;
figure 6 shows a screen used by the selling entity for evaluation purposes;
figure 7 shows a screen used by the selling entity for introducing a new promotion item;
figure 8 shows a screen used by the retailer entity for receiving promotion items;
figure 9 shows a screen used by the retailer entity for selecting particular promotion items;
figure 10 shows a screen used by the retailer entity for forming a request message, and
figure 11 shows a screen used by the retailer entity for showing the running promotion.

In the drawings a same reference has been assigned to a same or analogous element.

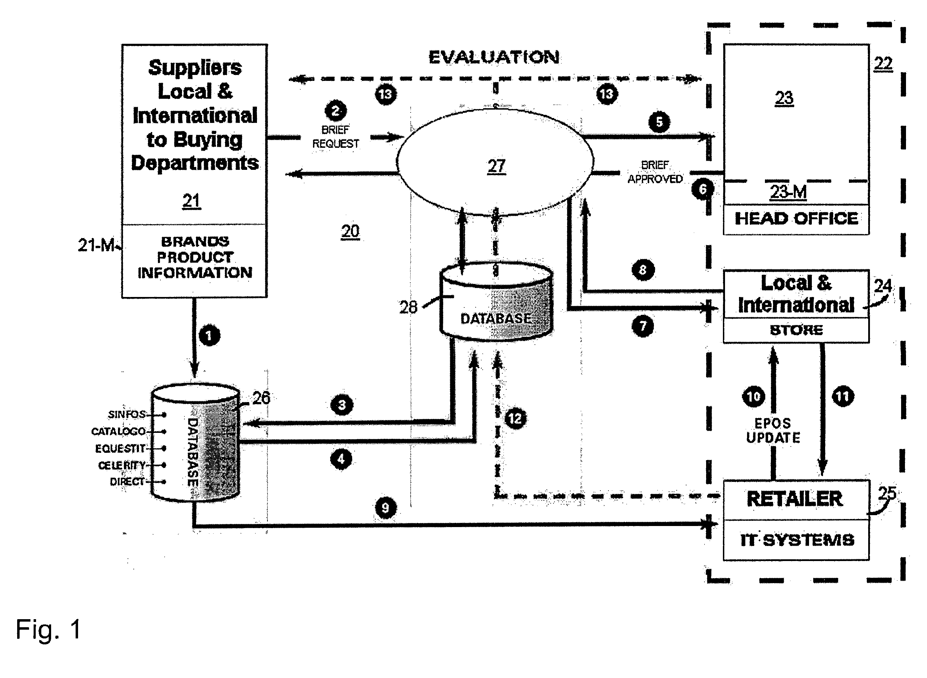

The communication device 20 shown in figure 1 comprises at least one first station 21 and at least a second station 22. For the sake of clarity only one first and one second station have been shown in figure 1. It will however be clear that a plurality of first and second stations can be part of the communication device. So every selling entity and every retailer entity which wishes to communicate with one another will have their dedicated first or second station. The selling entity will use a first station whereas the retailer entity will use a second station. The selling entities are for example formed by a manufacturer owning one or more brands, an importer of one or more brands or a distribution agent. So, for example the selling entity could be a company producing foods such as chocolate, biscuits, sugar etc.. The retailer entity could be a distribution network owning a plurality of stores, a petroleum company having gasoline stations with their own shops.

To the first station there is assigned a selling entity memory 21-M for storing promotion items relating to the brands owned by the selling entity. To the second station there is assigned a retailer entity memory for storing data relating to the retailer. To each first and second station there is assigned a selling entity identifier respectively a retailer entity identifier, identifying the respective station. This identifier is for example formed by a network address and/or a log-in code. The first and second stations are connected to a communication network in order to enable a two-way communication between them. This communication network is for example formed by a telephone network or the Internet. An interface station 27 is also connected to the communication network. The first and second station and the interface are able to bi-directionally communicate with one another.

The interface station 27 comprises a database 28 provided for storing a predetermined set of input and request frames as well as promotion item blocks as will be described in more detail hereunder. The interface station 27, the first 21 and second 22 station are further in communication with a further database 26 provided for storing product item identifiers. The further database is therefor connected to the communication network. The further database comprises for example the barcode of the products in order to universally identify them, product information, prices etc..

As illustrated in figure 1, the second station can comprise a number of substations. This is for example the case when the retailer entity is a distributor having a network of shops, a head office and a storage place. A first substation 23 could then be localised at the head office, a second substation 25 at the shops and a third substation 24 at the storage place. In such a manner, an internal communication network is established at the level of the retailer entity, whereas each of the substations can communicate either directly or indirectly with the interface station and the first station.

The interface station operates for example on an oracle platform and is protected by a firewall for security purposes.

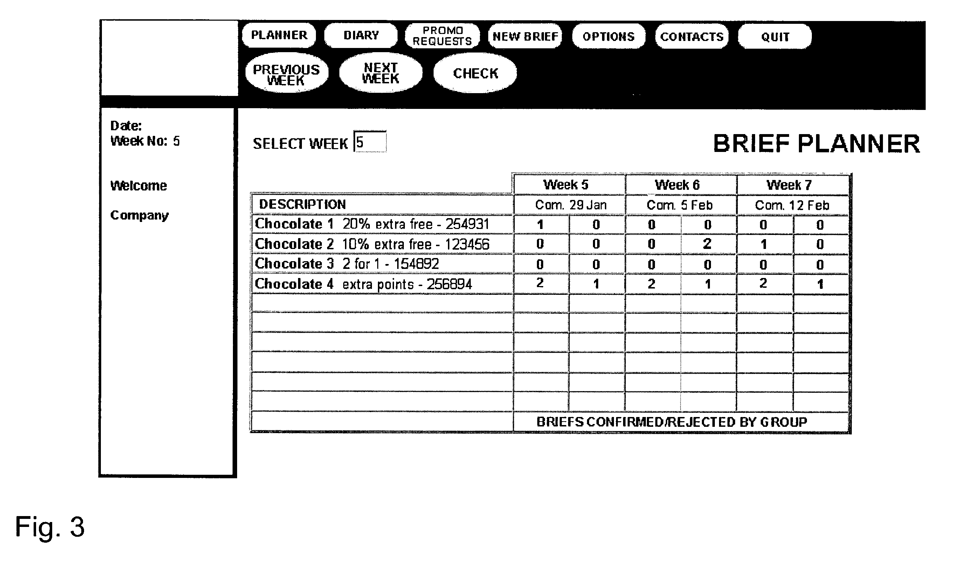

Suppose now that a selling entity, a chocolate manufacturer, wants to offer a promotion on some of its brands called chocolate 1, 2 and 3. The brand manager at the selling entity will log-in at the first station, for example by entering his user log-in identifier and a password. He will select in memory 21-M the concerned brands and the promotion items and will also call the further database (shown by arrow 1 in figure 1) to collect the product identifiers for the concerned brands. After having logged in on the interface station, he will request from the latter an input frame and will receive the latter if its log-in has been accepted by the interface station. Once received, the brand manager can input the data relating to chocolate 1, 2 and 3 and the promotion items. Figure 3 shows an example of a screen based on a received input frame and with the promotion item filled in.

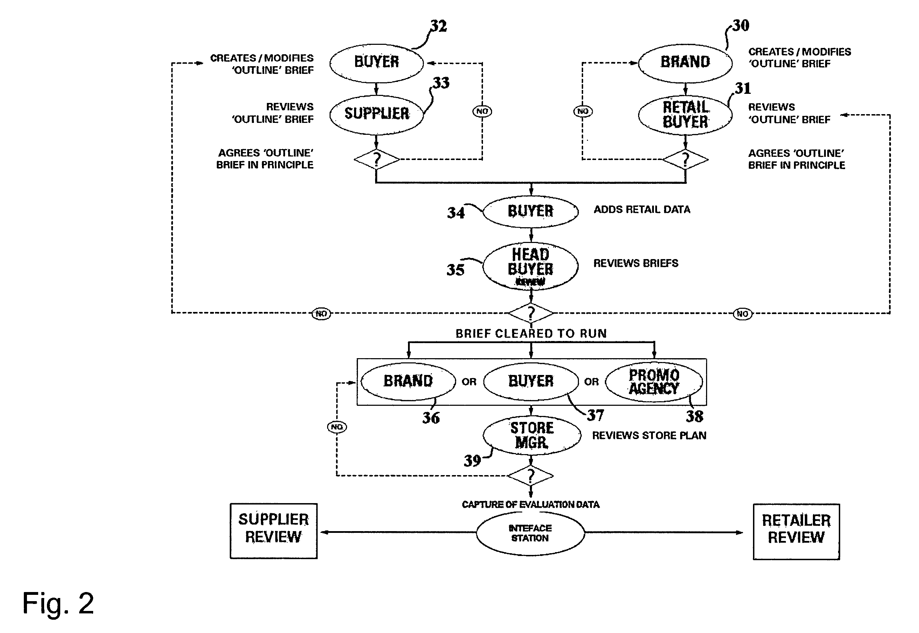

The first station comprises a block generator which is provided for retrieving the input frames and the promotion items. The block generator will integrate the retrieved promotion item, the products, as well as the selling entity identifier into the retrieved input frame such as to form the promotion item block shown in figure 3. The brand manager will also supply, if necessary, the targeted retailers into the promotion item block (see blocks 30 and 31 in figure 2). Once generated, the promotion item block will be sent by the first station to the interface station (shown by arrow 2 in figure 1).

In response to a received promotion item block, the interface station 27 will store the latter in the database 28 and look up (arrow 3) the indicated product details in the further database 26. In response thereto the further database will send (arrow 4) product data to the interface station for presentation to the retailers. The latter are then informed, for example by sending an e-mail (arrow 5) that a new promotion item block is available. This step could however be optional as the retailers could simply access the interface station in order to check which promotion item blocks are available.

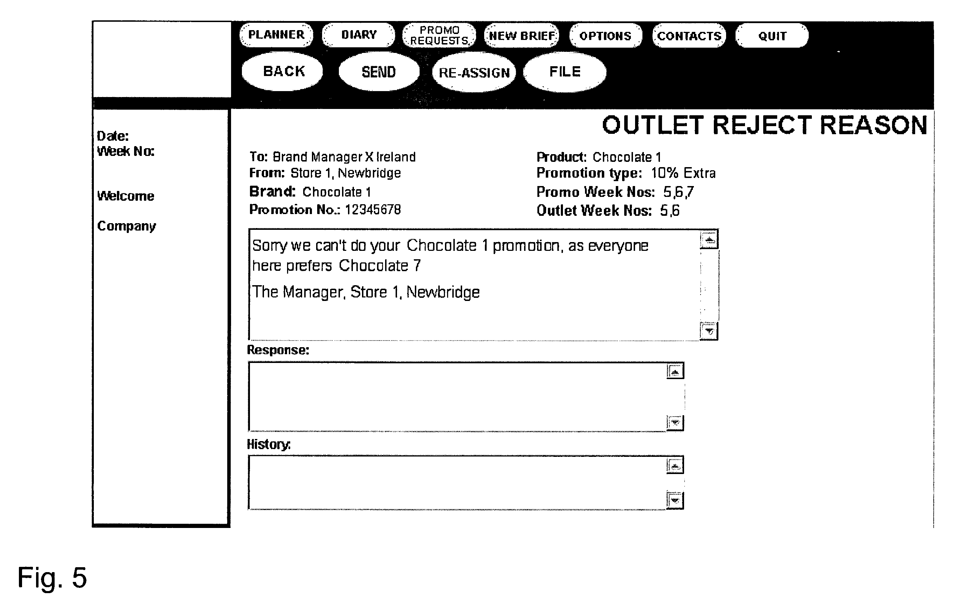

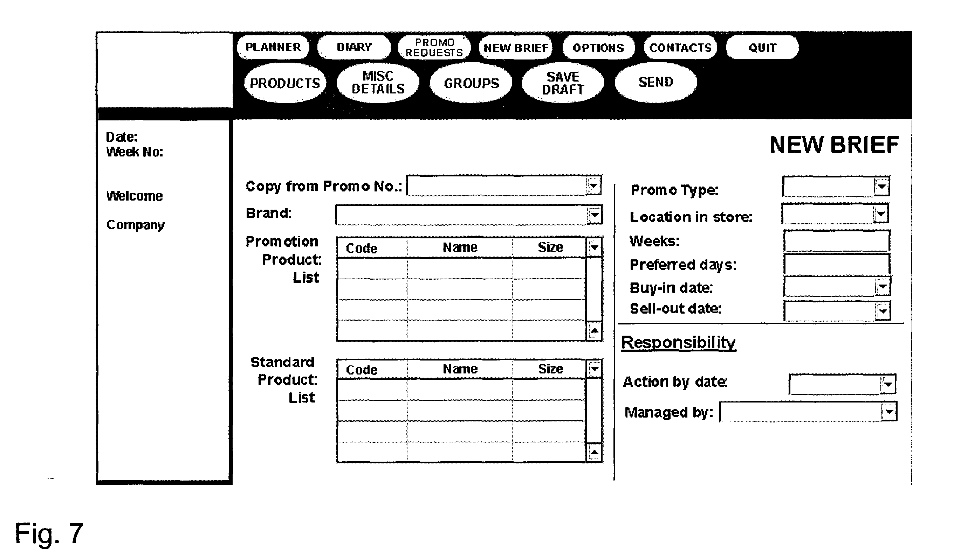

The retailer can now accept or reject (blocks 32 to 35 figure 2) the proposed block and inform (arrow 6) the interface station of his decision. If the offer is rejected, the retailer can indicate the reason why it was rejected which can then be read by the seller (as illustrated in figure 5). The brand manager could then eventually change the item or introduce another product. For the latter purpose he will use a screen as illustrated in figure 7.

If the proposed block is accepted, the specific stores of the retailer will be informed (arrow 7). This may be instigated either by the first station, the first substation or the interface station. The informed store may on its turn accept or reject the proposed block depending on its control and the one of their head office. The interface station is informed (arrow 8) of the choice made.

To implement this operation the retailer entity uses its second station to send by means of its request message generator a request to obtain a request frame from the interface station. This is also performed after a log-in operation. Upon receipt of a request frame the message generator will generate a request message by inputting into the request frame the retailer entity identifier and eventually a promotion request and transmit the request message to the interface station.

The interface station is provided to retrieve the retailer entity identifier from the request message and the promotion request, if available. The interface station can then select among the promotion item block, stored in the database, those compatible with the request message. This selection is for example realised based on the identified retailers which could be included in the promotion item block. The selection could also be based on the second identifiers identifying the product range of the retailer to whom it belongs.

Following an acceptation of the promotion item block (steps 36 to 39 - figure 2), the interface station triggers an event to send over the product data relating to the selected promotion item block to the retailer (arrow 9). Following this step the retailer updates (arrow 10) the store stock with the correct product data for the accepted promotion. The store(s) (arrow 11) sends the sales data to the head office. The interface station (arrow 12) is informed, preferably on a daily basis or even less, on how the promotion runs by sending data relating to the amounts of sold products belonging to the selected promotion item block. The selling entity (arrow 13) can then retrieve this information for analysis purposes. This real time reaction allows a daily evaluation of the promotion's effectiveness.

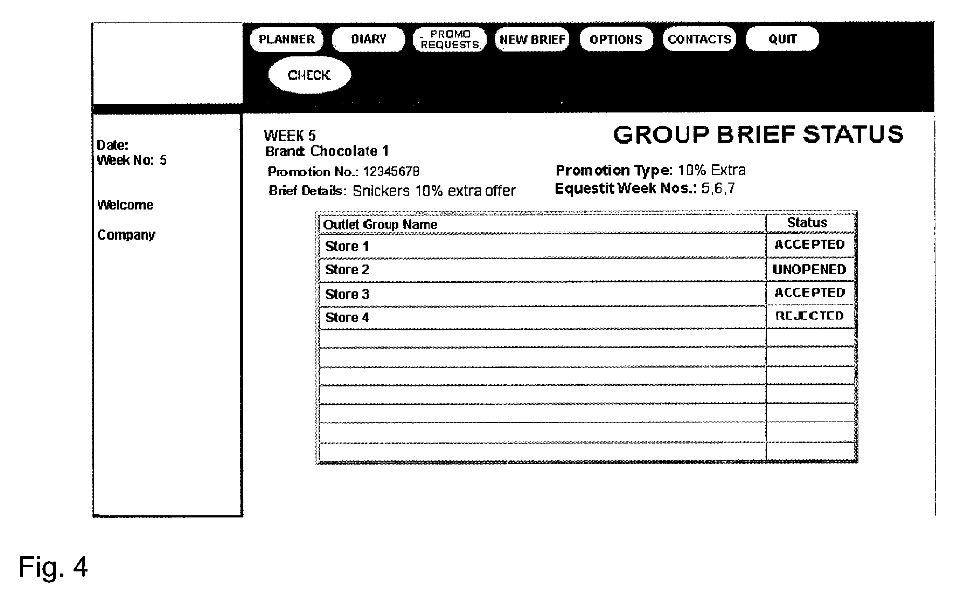

As shown in figure 3, the brand manager can indicate in the promotion item block the weeks in which the promotion applies. The screen illustrated in figure 4 shows the different stores to which the promotion is open and which of them have accepted or not.

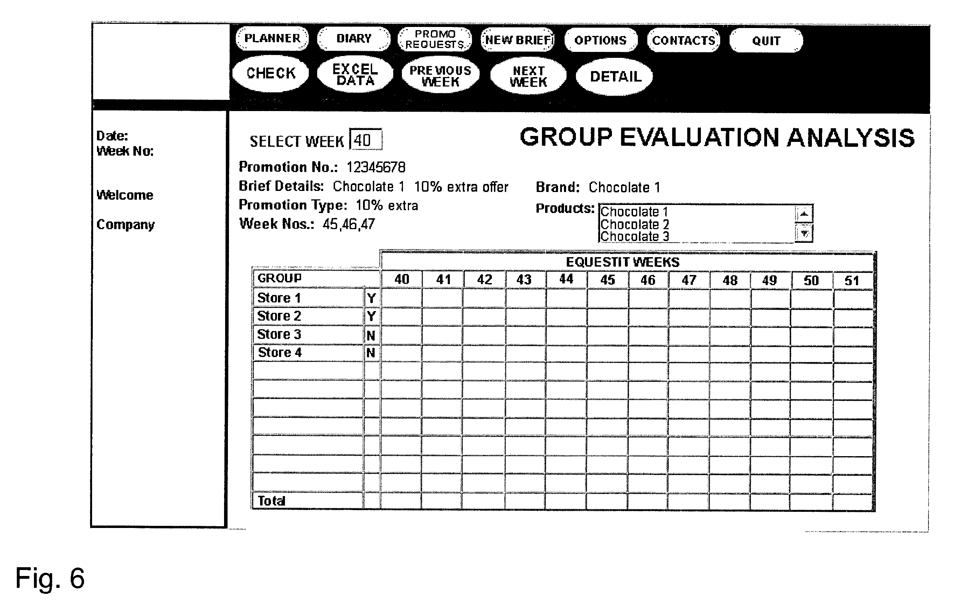

Figure 6 shows an evaluation analysis illustrating for chocolate 1 how the different concerned stores performed during the weeks the open promotion.

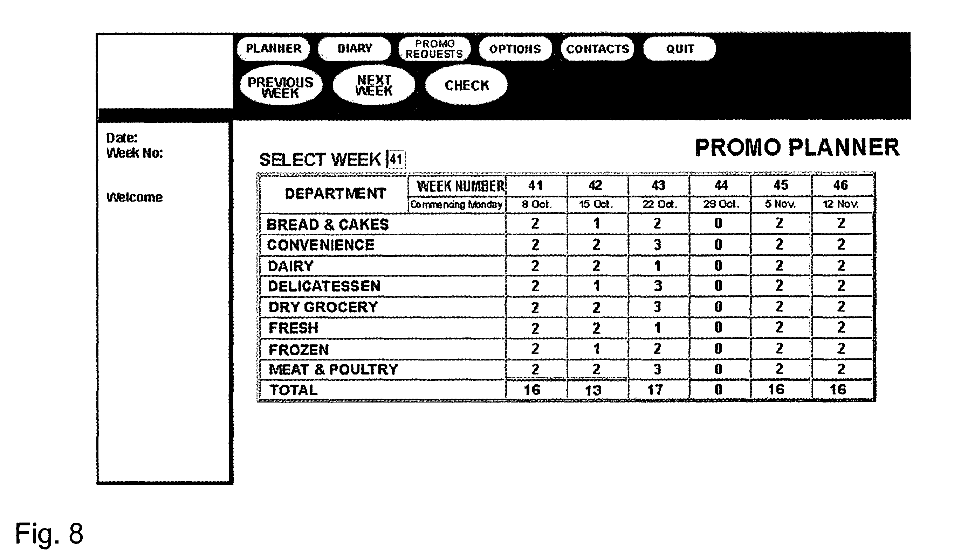

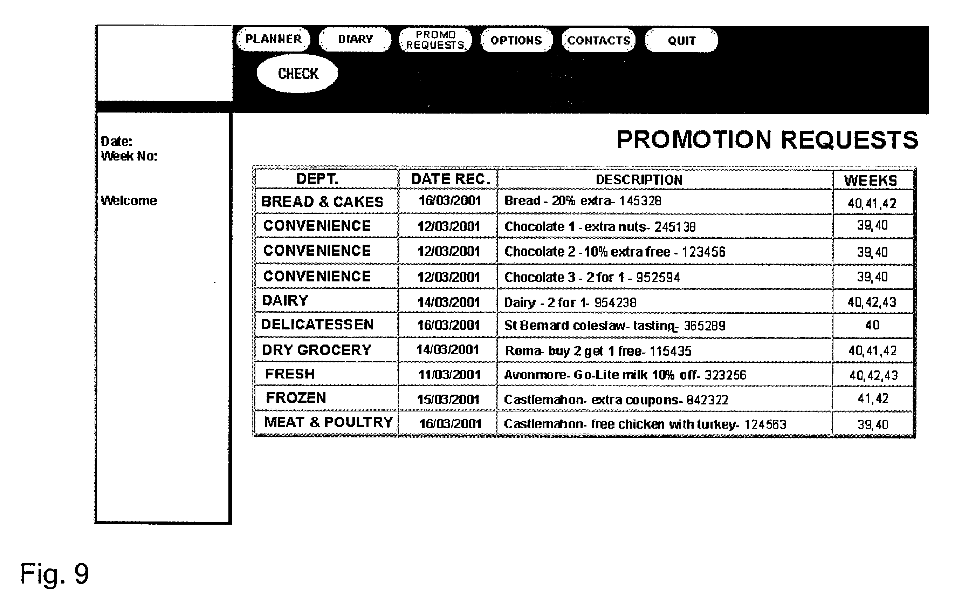

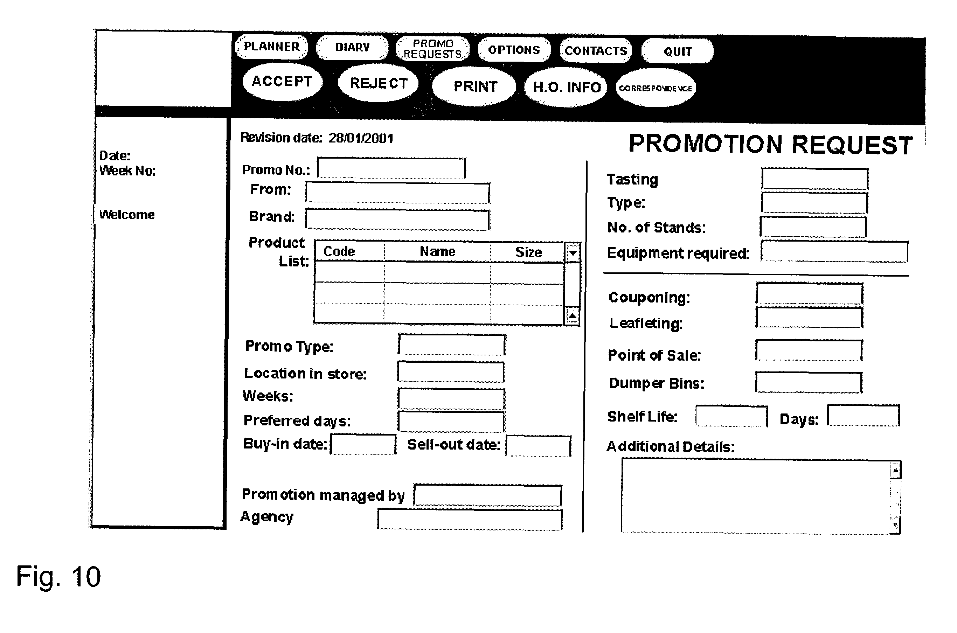

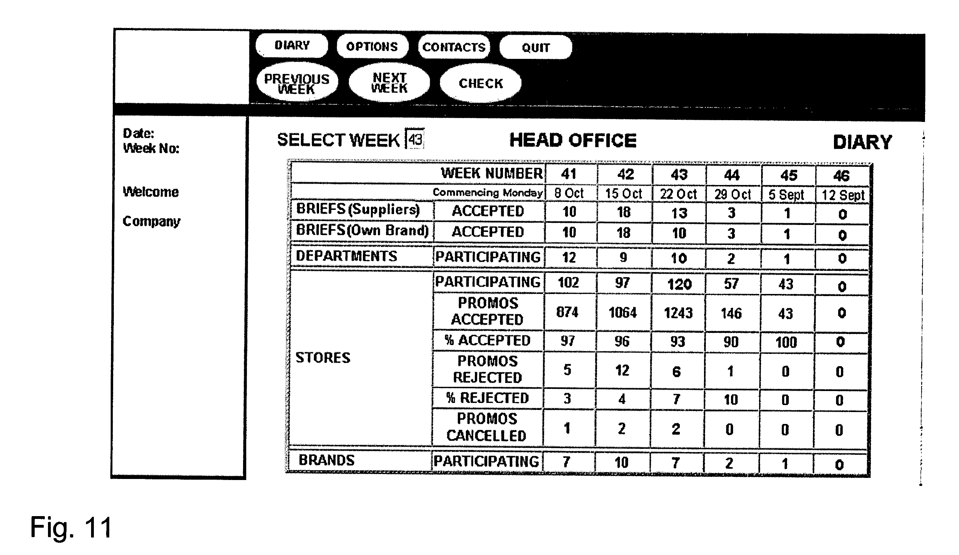

Figure 8 shows a screen used as promotion planner for the retailer. The latter can select for a plurality of weeks among several blocks those which could be used by him. Figure 9 shows then among the selected blocks what is exactly offered. Figure 10 shows a screen enabling the retailer to fill in a request massage. Figure 11 illustrates if the retailer's head office can have an overview of how the different stores have reacted on the proposed promotion item block.

## Claims

1. A communication device comprising at least a first station to which a selling entity memory for storing promotion items is assigned and at least a second station to which a retailer entity memory is assigned, said first and second station being connected to a communication network in order to enable a two-way communication between them, **characterised in that** said communication network comprises an interface station, provided for communicating with said first and second station, said interface station comprising a database, provided for storing a predetermined set of input and request frames as well as promotion item blocks built up according to at least one of said input frames, and wherein to each first and second station there is assigned a selling entity identifier, respectively a retailer entity identifier, identifying the respective stations, said first station comprising a block generator provided for retrieving from said database one of said input frames and for retrieving promotion items from said selling entity memory, said block generator being further provided for integrating said retrieved promotion items and said selling entity identifier into said retrieved input frame in order to form said promotion item block, said first station being provided for transmitting said generated promotion item block to said interface station, said second station being provided for retrieving a request frame from said database, said second station comprising a request message generator, provided for generating request messages by inputting into said request frame said retailer entity identifier, said second station being also provided for transmitting said request message to said interface station, said interface station being provided for selecting, based on said request message and among said stored promotion item blocks, those compatible with said request message.

2. A communication device as claimed in claim 1, **characterised in that** said request generator is further provided for inputting promotion requests, issued by said second station into said request messages.

3. A communication device as claimed in claims 1 or 2, **characterised in that** said device comprises a further database, provided for storing product item identifiers, said further database being connected to said communication network.

4. A communication device as claimed in anyone of the claims 1 to 3, **characterised in that** said set of request frames comprises a subset of rejection message frames, said request message generator being provided for enabling an insertion of a rejection message into a rejection message frame.

5. A communication device as claimed in anyone of the claims 1 to 4, **characterised in that** said set of request messages comprises a further subset of evaluation message frames, said first station being provided for retrieving said further subset of evaluation message frames and said request message generator and said block generator being provided for generating an evaluation request message based on said evaluation message frame.
